# EUROPÄISCHE PATENTSCHRIFT

(11) **EP 1 397 405 B1**
(45) Veröffentlichungstag und Bekanntmachung des Hinweises auf die Patenterteilung: **02.03.2011**
(21) Anmeldenummer: 02776509.8
(22) Anmeldetag: 23.05.2002
(51) Int. Cl.: C08G 18/08, C08G 18/12, C08G 18/66

(54) **POLYURETHANDISPERSIONEN UND DEREN VERWENDUNG**
POLYURETHANE DISPERSIONS AND USE THEREOF
DISPERSIONS DE POLYURETHANNE ET LEUR UTILISATION

(30) Priorität: 05.06.2001 DE 10127208
(43) Veröffentlichungstag der Anmeldung: 17.03.2004
(73) Patentinhaber: BASF SE, 67056 Ludwigshafen (DE)
(72) Erfinder: HÄBERLE, Karl, 67346 Speyer (DE); HÖRNER, Klaus, Dieter, 68623 Lampertheim (DE); HOFER, Bruno, 67067 Ludwigshafen (DE); TREIBER, Reinhard, 69181 Leimen (DE); WEYLAND, Peter, 67227 Frankenthal (DE)
(86) Internationale Anmeldenummer: PCT/EP2002/005630
(87) Internationale Veröffentlichungsnummer: WO 2002/098939

(56) Entgegenhaltungen:
- DE-A- 19 719 924
- US-A- 4 066 591
- US-A- 5 916 960

## Beschreibung

Die vorliegende Erfindung betrifft die Verwendung von mit Ammoniak neutralisierten Polyurethandispersionen, ein Verfahren zu deren Herstellung sowie deren Verwendung.

Die DE 2 624 422 A1 (US 4,066,591) beschreiben Polyurethan-Dispersionen, die Dimethylolpropionsäure als potentiell hydrophile Gruppe enthalten. Als zur Neutralisierung geeignete Mittel nennt sie unter anderen auch Ammoniak. Ferner wird beschrieben, daß ein Voraddukt, das Säure- und NCO-Gruppen enthält, in ein Gemisch von wässrigem Ammoniak und Hydrazin gegeben wird. Es kann nun sowohl Ammoniak als auch Hydrazin mit den NCO-Gruppen des Prepolymeren zu den entsprechenden Addukten als auch mit dem Carbonsäuregruppen zu Ammonium- bzw. Hydraziniumsalzen reagieren. D.h., daß das Verfahren eine schwer kontrollierbare Konkurrenzreaktion darstellt.

Die DE 3 641 494 A1 gibt ein Verfahren an, bei dem man in einer Ausführungsform das NCO-Gruppen tragende Prepolymer mit aminischen oder alkoholischen Kettenverlängerern so umsetzt, daß die o.a. Konkurrenzreaktion keine Rolle mehr spielt. Nachteilig an diesem Verfahren ist allerdings, daß zwingend 0,5 bis 30 Gew.-% an in Polyetherketten vorliegenden Ethylenoxid-Einheiten mitverwendet werden müssen. Es wäre wünschenswert, wenn man ohne diese Polyether auskommen könnte.

Die DE 3 922 493 A1 lehrt, daß man Dispersionen, die mit Aminen neutralisiert sind, mit Ammoniak versetzt und anschließend destilliert. Dabei wird das Amin abgezogen und durch Ammoniak ersetzt. Nicht nur, daß das Verfahren sehr aufwendig ist und das Produkt belastet; es muß auch das Destillat, das Wasser, Ammoniak und Amin enthält, sachgerecht entsorgt werden.

Die DE 19 750 186 A1 beschreibt ein Addukt von Isophorondiamin an ungesättigte Carbonsäuren wie z.B. Acrylsäure als hydrophile Gruppe für Polyurethan-Dispersionen. Aus dieser Schrift geht weiter hervor, daß diese Verbindung auch mit Ammoniak neutralisiert werden kann. Es ist jedoch in jedem Falle von Nachteil, daß man in einem vorgeschalteten Schritt die hydrophile Gruppe erst herstellen muß.

EP 0 017 199 A1 beschreibt die Herstellung von Ammoniak-neutralisierten Polyurethan-Dispersionen auf Basis von ethylenisch ungesättigten Fettsäurepolyesterpolyolen. Damit Filme dieser Dispersionen technisch brauchbare Eigenschaften erhalten, ist der Zusatz ökologisch bedenklicher Sikkative, z.B. von Kobaltsalzen, nötig.

Die EP 411 196 A2 beschreibt ammoniak-neutralisierte Polyurethandispersionen, die ohne die Verwendung Isocyanat-reaktiver Amine hergestellt werden. Diese Polyurethandispersionen ergeben lediglich sehr weiche Filme.

US 5,916,960 beschreibt die Mischung von selbstvernetzenden Polyvinyl-Dispersionen mit Ammoniak-neutralisierten Dispersionen, die nach den Lehren der bereits diskutierten US 4,066,591 bzw. EP 17 199 erhalten werden.

Aus der EP 1 072 652 A2 sind Beschichtungsmittel aus einem Gemisch aus den anionischen Dispersionen gem. DE 19 653 585 A1 und EP 0 242 731 B2 bekannt. Die Dispersion A enthält auch Festkörper das zumindest teilweise in der Salzform vorliegende Umsetzungsprodukt aus
a) einem NCO-Prepolymer aus
   i) 20 bis 80 Gew.-% eines Diisocyanats ausgewählt aus der Gruppe der aliphatischen Diisocyanate, cycloaliphatischen Diisocyanate und Mischungen daraus,
   ii) 20-80 Gew.-% eines Makrodioles mit einem Molgewicht von 500 bis 10000 und Gemischen daraus,
   iii) 2 bis 12 Gew.-% 2,2-Bis-(hydroxymethyl)-alkanmonocarbonsäuren, bevorzugt Dimethylolpropionsäure,
   iv) 0 bis 15 Gew.-% kurzkettiger Diole mit einem Molekulargewicht von 62 bis 400 g/mol,
   v) 0 bis 10 Gew.-% monofunktioneller Alkohole als Kettenregler mit einem Molekulargewicht 32 bis 350 g/mol,
b) 0 bis 15 Gew.-% Diamine des Molekulargewichtsbereichs 60 bis 300 g/mol als Kettenverlängerer,
c) 0 bis 10 Gew.-% Kettenregler, ausgewählt aus der Gruppe der Monoamine, Alkanolamine und Ammoniak,
d) 0 bis 3 Gew.-% Wasser und
e) 0,1 bis 10 Gew.-% Neutralisationsmittel, wobei sich die genannten Prozentangaben zu 100% ergänzen mit der Maßgabe, daß man in der Prepolymerstufe a) einen Wert von 65 bis 85%, vorzugsweise 75 bis 80% des berechneten NCO-Gehalts einstellt.

Die Dispersion B enthält ein Umsetzungsprodukt aus
a) einem NCO-Prepolymer aus
   i) 20 bis 60 Gew.-% eines Diisocyanates ausgewählt aus der Gruppe der allphatischen Diisocyanate, cycloaliphatischen Diisocyanate, und Mischungen daraus,
   ii) 10 bis 80 Gew.-% eines Makrodioles mit einem Molekulargewicht von 500 bis 10000 und Gemische daraus,
   iii) 2 bis 12 Gew.-% 2,2 -Bis-(hydroxymenthyl)-alkanmonocarbonsäuren, bevorzugt Dimethylolpropionsäure,
   iv) 0 bis 15 Gew.-% kurzkettiger Diole und Triole mit einem Molekulargewicht von 62 bis 400,
   v) 0 bis 10 Gew.-% monofunktioneller Alkohole und Polyether aus Kettenregler mit einem Molekulargewicht von 32 bis 2500,
b) 0 bis 15 Gew.-% Diamine und Triamine des Molekulargewichtsbereichs 60 bis 300 als Kettenverlängerer,
c) 0 bis 10 Gew.-% Kettenregler, ausgewählt aus der Gruppe der Monoamine, Alkanolamine und Ammoniak
d) 0 bis 3 Gew.-% Wasser und
e) 0,1 bis 10 Gew.-% Neutralisationsmittel, wobei sich die genannten Prozentangaben zu 100 % ergänzen mit der Maßgabe, daß die Verzweigung sowohl durch Triole als auch durch Triamine erreicht wird und nicht beide a) iv) und b), Null sind.

Das beschriebene Umsetzungsprodukt wird für die Herstellung von lichtechten Beschichtungsmitteln eingesetzt. Weitere Verwendungen sind aus dieser Schrift nicht bekannt.

Nachteilig hierbei ist, daß es sehr schwierig ist, den NCO-Gehalt auf den geforderten Wert zu bringen, was sich auch in den sehr langen Reaktionszeiten äußert.

Ähnliche Offenbarungen sind auch bekannt aus DE 197 19 924, JP 10-265539, JP10-1525, US 4,501,852 und EP 1 146 061.

Aufgabe der vorliegenden Erfindung ist es somit, Polyurethandispersionen zur Verfügung zu stellen, die die genannten Nachteile nicht aufweisen.

Insbesondere sollen die Polyurethandispersionen sich für die Herstellung von Beschichtungen, Klebstoffen, Imprägnierungen und Dichtungsmassen eignen.

Außerdem ist es Aufgabe der Erfindung, ein Verfahren zur Herstellung der genannten Polyurethandispersionen zur Verfügung zu stellen, das einfach und sicher durchzuführen und reproduzierbar ist. Es sollen insbesondere nicht zwangsweise Komponenten mitverwendet werden müssen, die keinen wesentlichen Beitrag zu den Endeigenschaften der Dispersionsfilme leisten. Das Verfahren soll keine Abfallprodukte liefern, die separat entsorgt werden müssen. Es sollen keine Einsatzstoffe eigens hergestellt werden müssen und es sollen in der Dispersion keine toxikologisch bedenklichen Chemikalien enthalten sein.

Ferner soll die Herstellung der beschriebenen Polyurethandispersionen ohne den Einsatz von Polyethylenoxid-Einheiten möglich sein.

Diese Aufgabe wird durch ein Verfahren zur Herstellung von Polyurethandispersionen gelöst, bei welchem
a) aus Makroolen, ionischen oder potentiell ionischen Polyolen und überschüssigen Polyisocyanaten ein NCO-teminiertes Prepolymer hergestellt wird,
b) dieses Prepolymer mit Verbindungen, die mindestens 2 gegenüber Isocyanat reaktive Aminogruppen aufweisen, in einem Verhältnis NCO-Gruppen/NH-Gruppen von 1:1 umgesetzt
c) im Anschluß an die Umsetzung neutralisiert und
d) nach der Neutralisation mit Wasser dispergiert wird.

Als Makroole werden solche Verbindungen eingesetzt, die ein Molekulargewicht von 500 bis 5000, vorzugsweise von 800 bis 4500, höchst bevorzugt von 800 bis 3000 aufweisen. Besonders bevorzugt ist der Einsatz von Makrodiolen.

Bei den Makroolen handelt es sich insbesondere um Polyesterpolyole, die z.B. aus Ullmanns Encyklopädie der technischen Chemie, 4. Auflage, Band 19, S. 62-65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und ggf., z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthatsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Alkenylbernsteinsäure, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als Diole kommen z.B. Ethylenglykol, Propan-1,2-diol, Propan-1,3-diol, Butan-1,3-diol, Butan-1,4-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglykol, Butan-1,4-diol, Hexan-1,6-diol, Octan-1,8-diol und Dodecan-1,12-diol. Weiterhin bevorzugt sind Neopentylglykol und Pentandiol-1,5.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)z-COOH ableiten, wobei z eine Zahl von 1 bis 20 ist und ein H-Atom einer Methyleneinheit auch durch einen C₁- bis C₄-Alkylrest substituiert sein kann. Beispiele sind epsilon-Caprolacton, beta-Propiolacton, gamma-Butyrolacton und/oder Methyl-epsilon-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere Polyetherole in Betracht. Sie sind insbesondere durch Polymerisation von Propylenoxid, Butylenoxid, Tetrahydrofuran, Styroloxid oder Epichlorhydrin mit sich selbst, z.B. in Gegenwart von BF₃ oder durch Anlagerung dieser Verbindungen ggf. im Gemisch oder nacheinander, an Startkomponenten mit reaktionsfähigen Wasserstoffatomen, wie Alkohole oder Amine, z.B. Wasser, Ethylenglykol, Propan-1,2-diol, 1,2-Bis-(4-hydroxyphenyl)-propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine, bevorzugt solche mit 2 endständigen Hydroxylgruppen, z.B. α-ω-Dihydroxypolybutadien, α-ω-Dihydroxypolymethacrylester oder α-ω-Dihydroxypolyacrylester als Monomere. Solche Verbindungen sind beispielsweise aus der EP-A-0 622 378 bekannt. Weitere geeignete Polyole sind Polyacetale, Polysiloxane und Alkydharze.

Neben den genannten Makroolen können ggf. auch kurzkettige Polyole zugesetzt werden. Hierbei kommen beispielsweise kurzkettige Diole mit einem Molekulargewicht von 62 bis 500, insbesondere 62 bis 200 g/mol in Betracht. Als kurzkettige Diole werden vor allem als Aufbaukomponenten die für die Herstellung von Polyesterpolyolen genannten kurzkettigen Alkandiole eingesetzt, wobei die unverzweigte Diole mit 2 bis 12 C-Atomen und einer gradzahligen Anzahl von C-Atomen sowie Pentan-1,5-diol bevorzugt werden. Außerdem kommen Phenole, aromatische Dihydroxy-Verbindungen oder Bisphenol A oder F als Diole in Betracht.

Als ionische oder potentiell ionische Polyole kommen erfindungsgemäß 2,2-Di-(hydroxymethyl)-Alkan-Monocarbonsäuren mit insgesamt bis zu 10 Kohlenstoffatomen in Betracht. Besonders bevorzugt ist Dimethylolpropionsäure.

Als Polyisocyanate kommen efindungsgemäß vorzugsweise die in der Polyurethanchemie üblicherweise eingesetzten Diisocyanate in Betracht.

Insbesondere zu nennen sind Diisocyanate X(NCO)₂ wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocylohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4-Diisocyanato-diphenylmethan, 2,4'-Diisocyanato-diphenylmethan, p-Xyxlylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomer sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4 Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4:1 bis 1:4 beträgt. Ganz besonders bevorzugt werden nur Isocyanate verwendet, die ausschließlich aliphatisch gebundene NCO-Gruppen tragen.

Als Polyisocyanate kann man auch Isocyanate einsetzen, die neben freien NCO-Gruppen weitere, von NCO-Gruppen abgeleitete Gruppen, wie z.B. Isocyanurat-, Biuret-, Harnstoff-, Allophanat-, Uretdion- oder Carbodiimidgruppen tragen.

Die beschriebenen Makroole, ionischen oder potentiell ionischen Polyole sowie Isocyanate und ggf. kurzkettigen Polyole werden zu einem NCO-terminierten Prepolymer umgesetzt. Hierbei werden vorzugsweise di-funktionelle Bausteine enthaltende Polyole verwendet. Das Verhältnis von NCO-Gruppen zu NCOreaktiven Gruppen soll erfindungsgemäß zwischen 1,1:1 bis 2:1, vorzugsweise 1,15:1 bis 1,9:1, besonders bevorzugt 1,2:1 bis 1,5:1 liegen.

Dieses Prepolymer wird im Schritt b weiter umgesetzt. Als Reaktionskomponente können alle aliphatischen und/oder cycloaliphatischen Verbindungen verwendet werden, die mindestens zwei gegenüber Isocyanaten reaktive Aminogruppen tragen. Bevorzugt ist der Einsatz von Diamin. Hierfür in Frage kommen insbesondere Ethylendiamin, Propylendiamin, Hexamethylendiamin, Isophorondiamin (IPDA), p-Xylylendiamin, 4,4-Diaminodicyclohexylmethan und 4,4-Diamino-3,3-dimethyldicyclohexylmethan.

Im Anschluß an die Umsetzung des Prepolymers erfolgt eine Neutralisierung. Hierfür sind z.B. Ammoniak, N-Methylmorpholin, Dimethylisopropanolamin, Triethylamin, Dimethylethanolamin, Methyldiethanolamin, Triethanolamin, Morpholin, Tripropylamin, Ethanolamin, Diethanolamin, Triisopropanolamin, N-Ethyl-diisopropylamin und Gemische daraus geeignet.

Besonders bevorzugt ist erfindungsgemäß der Einsatz von Ammoniak. Der Gehalt an COO⁻ NH₄⁺ nach der Neutralisierung soll erfindungsgemäß zwischen 100 und 600 mmol/kg, vorzugsweise 200 bis 500, besonders bevorzugt 250 bis 500 liegen.

Nach der Neutralisation wird mit Wasser dispergiert und ggf. Lösemittel abdestilliert. Durch die Zugabe von Wasser und das anschließende Entfernen des Lösemittels durch Destillation läßt sich insbesondere die gewünschte Festkörperkonzentration einstellen.

Die erfindungsgemäßen Dispersionen werden insbesondere zur Herstellung von Beschichtungen, Klebstoffen, Imprägnierungen und Dichtmassen eingesetzt. Insbesondere sind die Dispersionen für die Herstellung biologisch abbaubarer Produkte geeignet.

Im folgenden wird die Erfindung unter Bezugnahme auf ein Beispiel näher erläutert:

### Beispiel

In einem Rührkolben werden vorgelegt:
800 g (0,40 mol) eines Polyesterols aus Isophthatsäure, Adipinsäure und Hexandiol-1,6 der OH-Zahl 56 mg/g,
80,4 g (0,60 mol) DMPA und
36,0 g (0,40 mol Butandiol-1,4.
Dazu gibt man bei 105°C
400 g (1,80 mol) IPDI und
160 g Aceton.
Nach vier Stunden rühren bei 105°C wird mit
1600 g Aceton
verdünnt.
Der NCO-Gehalt der Lösung wird zu 1,11 % bestimmt (berechnet: 1,09%). Die Lösung wird auf 45°C gekühlt und mit
68,0 g (0,40 mol) IPDA versetzt.
Nach 90 Minuten wird mit
50,0 g (0,73 mol) 25%igen wässrigem Ammoniak neutralisiert, mit 3000 g Wasser despergiert und das Aceton i.V. abgezogen.

Man erhält eine fast transparente Dispersion mit einem Feststoffgehalt von 30 Gew.-%. Ein Gießfilm dieser Dispersion weist eine Reißspannung von 29 MPa bei einer Reißdehnung von 415 % auf (Zugversuch nach DIN 53504).

## Patentansprüche

1. Verfahren zur Herstellung von Polyurethandispersionen, wobei die Polyurethandispersion erhältlich ist, indem
a) aus Makroolen, ionisch oder potentiell ionischen Polyolen und überschüssigen Polyisocyanaten ein NCO-terminiertes Präpolymer hergestellt wird,
b) dieses Prepolymer mit Verbindungen, die mindestens 2 gegenüber Isocyanat reaktive Aminogruppen aufweisen, in einem Verhältnis NCO-Gruppen/NH-Gruppen von 1:1 umgesetzt,
c) im Anschluß an die Umsetzung neutralisiert, und
d) nach der Neutralisation mit Wasser dispergiert wird.

2. Verfahren nach Anspruch 1 **dadurch gekennzeichnet, daß** in Schritt a) zusätzlich kurzkettige Diole mit einem Molekulargewicht von 62 bis 500 g/mol eingesetzt werden.

3. Verfahren nach Anspruch 1 oder 2 **dadurch gekennzeichnet, daß** als ionische oder potentiell ionische Polyole 2,2-Di-(hydroxymethyl)-alkanmonocarbonsäuren eingesetzt werden.

4. Verfahren nach Anspruch 1 bis 3 **dadurch gekennzeichnet, daß** als ionisches oder potentiell ionisches Polyol Di-(hydroxymethyl)-propionsäure eingesetzt wird.

5. Verfahren nach einem der Ansprüche 1 bis 4 **dadurch gekennzeichnet, daß** zur Umsetzung mit dem Prepolymer Diamine eingesetzt werden.

6. Verfahren nach einem der Ansprüche 1 bis 5 **dadurch gekennzeichnet, daß** in dem Prepolymer das Verhältnis NCO/NH funktionell zwischen 0,9:1 und 1:1 liegt.

7. Verfahren nach einem der Ansprüche 1 bis 6 **dadurch gekennzeichnet, daß** das Verhältnis NCO/NH - funktionell zwischen 0,95:1 und 1:1 liegt.

8. Verfahren nach einem der Ansprüche 1 bis 7 **dadurch gekennzeichnet, daß** zur Neutralisierung Ammoniak eingesetzt wird.

9. Polyurethandispersionen herstellbar in einem Verfahren gemäß einem der Ansprüche 1 bis 8.

10. Verwendung der Polyurethandispersionen nach Anspruch 9 für Beschichtungen, Imprägnierung, Dichtmassen und Klebstoffe.

## Claims

1. A process for preparing polyurethane dispersions, the polyurethane dispersion being obtainable by
a) preparing an NCO-terminated prepolymer from macrools, ionic or potentially ionic polyols, and excess polyisocyanates,
b) reacting this prepolymer with compounds having at least two isocyanate-reactive amino groups, in an NCO group/NH group ratio of 1:1,
c) neutralizing the product following the reaction, and
d) dispersing it with water after the neutralization.

2. The process according to claim 1, wherein short-chain diols having a molecular weight of from 62 to 500 g/mol are used additionally in step a).

3. The process according to claim 1 or 2, wherein 2,2-di(hydroxymethyl)alkanemonocarboxylic acids are used as ionic or potentially ionic polyols.

4. The process according to claims 1 to 3, wherein di(hydroxymethyl)propionic acid is used as ionic or potentially ionic polyol.

5. The process according to one of claims 1 to 4, wherein diamines are used for the reaction with the prepolymer.

6. The process according to one of claims 1 to 5, wherein the ratio NCO/NH functionally in the prepolymer is between 0.9:1 and 1:1.

7. The process according to one of claims 1 to 6, wherein the ratio NCO/NH functionally is between 0.95:1 and 1:1.

8. The process according to one of claims 1 to 7, **characterized in that** ammonia is used for neutralization.

9. A polyurethane dispersion preparable in a process according to one of claims 1 to 8.

10. The use of the polyurethane dispersions according to claim 9 for coatings, impregnating, sealants, and adhesives.

## Revendications

1. Procédé de fabrication de dispersions de polyuréthane, la dispersion de polyuréthane pouvant être obtenue par
a) la fabrication d'un prépolymère à terminaison NCO à partir de macrools, de polyols ioniques ou potentiellement ioniques et de polyisocyanates en excès,
b) la mise en réaction de ce prépolymère avec des composés qui comportent au moins 2 groupes amino réactifs avec les isocyanates, en un rapport groupes NCO/groupes NH de 1:1,
c) la neutralisation après la réaction et
d) la dispersion avec de l'eau après la neutralisation.

2. Procédé selon la revendication 1, **caractérisé en ce que** des diols à chaîne courte ayant un poids moléculaire de 62 à 500 g/mole sont également utilisés à l'étape a).

3. Procédé selon la revendication 1 ou 2, **caractérisé en ce que** des acides 2,2-di-(hydroxyméthyl)-alcanemonocarboxyliques sont utilisés en tant que polyols ioniques ou potentiellement ioniques.

4. Procédé selon les revendications 1 à 3, **caractérisé en ce que** de l'acide di-(hydroxyméthyl)propionique est utilisé en tant que polyol ionique ou potentiellement ionique.

5. Procédé selon l'une quelconque des revendications 1 à 4, **caractérisé en ce que** des diamines sont utilisées pour la réaction avec le prépolymère.

6. Procédé selon l'une quelconque des revendications 1 à 5, **caractérisé en ce que** le rapport NCO/NH dans le prépolymère se situe fonctionnellement entre 0,9:1 et 1:1.

7. Procédé selon l'une quelconque des revendications 1 à 6, **caractérisé en ce que** le rapport NCO/NH se situe fonctionnellement entre 0,95:1 et 1:1.

8. Procédé selon l'une quelconque des revendications 1 à 7, **caractérisé en ce que** de l'ammoniac est utilisé pour la neutralisation.

9. Dispersions de polyuréthane pouvant être fabriquées par un procédé selon l'une quelconque des revendications 1 à 8.

10. Utilisation des dispersions de polyuréthane selon la revendication 9 pour des revêtements, une imprégnation, des matériaux d'étanchéité et des adhésifs.
